# EUROPEAN PATENT APPLICATION

(11) **EP 4 682 729 A2**
(43) Date of publication of application: **21.01.2026**
(21) Application number: 25202196.9
(22) Date of filing: 24.12.2020
(51) Int. Cl.: G06F 12/1081

(54) **APPARATUS AND METHOD FOR EXTENDING ENQUEUE COMMAND INSTRUCTIONS TO GENERAL-PURPOSE COMMANDS TO REDUCE CONTEXT-SWITCING IN A VIRTUALIZATION ENVIORNMENT**

(62) Divisional of application: 20966415.0
(71) Applicant: Intel Corporation, Santa Clara, CA 95054 (US)
(72) Inventor: KUMAR, Sanjay K., Hillsboro; OR, 97124 (US); LUKOSHKOV, Maksim, Clarecastle Clare, V95 F67W (IE); WANG, Junyuan, Shanghai, 200241 (CN); ZENG, Xin, Shanghai, 200241 (CN); GUO, Kaijie, Shanghai, 200241 (CN)
(74) Representative: Samson & Partner Patentanwälte mbB

(57) **Abstract**

Apparatus and method for extending enqueue command instruction to general-purpose commands is described herein. An apparatus embodiment includes a processor core to execute one or more instructions to store a job descriptor, stored in a memory, into a job queue, the job descriptor comprising a command field to indicate a command to be performed, a command type field to indicate a command type, and an address field; a hardware subsystem to be shared by a plurality of processes. When the command type field indicates the command is a device-specific command, the hardware subsystem is to perform a direct memory access, DMA, operation to access the memory at one or more memory locations associated with a process address space identifier, PASID, determinable via the address field of the job descriptor. When the command type field indicates the command is a common control command, the hardware subsystem is to perform a control operation associated with the job queue.

## Description

### TECHNICAL FIELD

Embodiments of the invention described herein relate generally to the reduction of context switching in a virtualized computer processing environment. In particular, the disclosure relates to architecture extension for extending enqueue command instructions to general-purpose commands.

### BACKGROUND ART

In computing, accelerators are specialized computing devices designed to perform certain functions more efficiently than is possible by software running on a general-purpose central processing unit (CPU). For example, visualization processes may be offloaded from the CPU onto a graphics card to enable faster, higher-quality playback of videos and games. Similarly, compression and decompression workloads that are computationally intensive may be better suited for specialized encoders and decoders rather than a CPU. Efficient use of accelerators can decrease latency, increase throughput, and free up CPU utilization.

### BRIEF DESCRIPTION OF THE DRAWINGS

The invention may best be understood by referring to the following description and accompanying drawings that are used to illustrate embodiments of the invention. In the drawings:
FIG. 1 is a block diagram illustrating a serialized datapath pipeline associated with DMA access according to an embodiment;
FIG. 2 is a block diagram illustrating a parallel pipeline associated with DMA access according to an embodiment;
FIG. 3 is a block diagram illustrating a computer systems platform on which various embodiments of the present invention may be implemented;
FIG. 4 illustrates an exemplary processor on which embodiments of the invention may be implemented;
FIG. 5 is a diagram illustrating an exemplary job descriptor according to an embodiment;
FIG. 6 illustrates an Input-Output Memory Management Unit (IOMMU) process address space identifier (PASID) table structure according to an embodiment;
FIG. 7 is a flow diagram illustrating operations associated with the execution of an enqueue instruction according to an embodiment;
FIG. 8 is a flow diagram illustrating the operations associated with the execution of a pre-translation request according to an embodiment;
FIG. 9 is a flow diagram illustrating the operations for processing a job descriptor from the job queue according to an embodiment;
FIG. 10 is a flow diagram illustrating a method according to an embodiment of the present invention;
FIG. 11 illustrates the operations for translating a guest PASID to a host PASID using a PASID translation table structure according to an embodiment;
FIG. 12 illustrates an exemplary flow of a PASID reset control command according to an embodiment;
FIG. 13 is a diagram illustrating the flow of using an enqueue command instruction to submit a control command according to an embodiment;
FIG. 14 illustrates an entry of the job queue according to an embodiment;
FIG. 15 is a block diagram illustrating an embodiment of a computer system on which various aspects of the present invention may be implemented;
FIG. 16 is a flow diagram illustrating a method for submitting a common control command using an enqueue command instruction according to an embodiment;
FIG. 17 is a flow diagram illustrate a method for processing job descriptors from the job queue according to an embodiment;
FIG. 18A is a block diagram illustrating both an exemplary in-order pipeline and an exemplary register renaming, out-of-order issue/execution pipeline according to embodiments of the invention;
FIG. 18B is a block diagram illustrating both an exemplary embodiment of an in-order architecture core and an exemplary register renaming, out-of-order issue/execution architecture core to be included in a processor according to embodiments of the invention;
FIG. 19 is a block diagram of a single core processor and a multicore processor with integrated memory controller and graphics according to embodiments of the invention;
FIG. 20 illustrates a block diagram of a system in accordance with one embodiment of the present invention;
FIG. 21 illustrates a block diagram of a second system in accordance with an embodiment of the present invention;
FIG. 22 illustrates a block diagram of a third system in accordance with an embodiment of the present invention;
FIG. 23 illustrates a block diagram of a system on a chip (SoC) in accordance with an embodiment of the present invention; and
FIG. 24 illustrates a block diagram contrasting the use of a software instruction converter to convert binary instructions in a source instruction set to binary instructions in a target instruction set according to embodiments of the invention.

### DETAILED DESCRIPTION

Embodiments of apparatus and method for extending enqueue command instructions to general-purpose commands are described herein. In the following description, numerous specific details are set forth to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments. For clarity, individual components in the Figures herein may be referred to by their labels in the Figures, rather than by a particular reference number.

In computing, hardware subsystems such as I/O devices, accelerators, graphics cards, and encoder/decoders are specialized computer devices designed to perform certain functions more efficiently than is possibly by software alone on a general-purpose central processing unit (CPU). CPU and software submit jobs to hardware subsystems via special instructions. For example, the enqueue command instruction, part of the Intel^{®} instruction architecture, enables user or kernel space software applications to submit jobs to hardware subsystems via abstracted job descriptors (descriptors). The use of job descriptors hides hardware semantics from software applications which, in turn, helps simplify the job submission process.

To submit a job, a software application first constructs a standardized job descriptor in memory. The information in the job descriptor may include, for example, the job (i.e. command or workload) to be performed, the process address space identifier (PASID) of the software application or thread, the privilege level (e.g., user or supervisor), and the data required by hardware subsystem to perform the job. Once the job descriptor is constructed, the application submits the job descriptor to the hardware subsystem by invoking or calling an enqueue command instruction. The enqueue command instruction may include one or more operands for specifying information such as the location of the job descriptor in memory and the target hardware subsystem to perform the job (e.g., an identifier of the hardware subsystem or its job queue). In one embodiment, a memory-mapped I/O (MMIO) address is used to identify the target hardware subsystem or the job queue.

When the enqueue command instruction is executed by the CPU, the job in the job descriptor is copied from the memory to the job queue of the target hardware subsystem. The queue may be a register or a local cache associated the target hardware subsystem. The jobs in the job queue are then processed by the hardware subsystem. As part of the performance of the job, the hardware subsystem requests data from system memory, usually through the input-output memory management unit (IOMMU).

### Pre-Translation of Memory Addresses in a Job Descriptor

Extended IOMMU with PASID support offers Shared Virtual Memory (SVM) function which allows hardware subsystems to access the memory by direct memory access (DMA) using virtual addresses. The use of SVM allows software applications to submit jobs to hardware subsystems without having to convert virtual addresses into physical addresses before submission. The overhead associated with address translations, however, is passed onto the IOMMU during DMA.

In host mode, the degradation in DMA performance can usually be attributed to the need to translation IO Virtual Addresses (IOVA) and/or Host Virtual Addresses into physical addresses. In either case, costly page table walks are often required. In virtual machine environments where Guest Virtual Addresses (GVA) are used, the degradation in DMA performance in SVM mode is even more severe due to nested translations. In some cases, the translation task can consume up to 80 CPU cycles per DMA request.

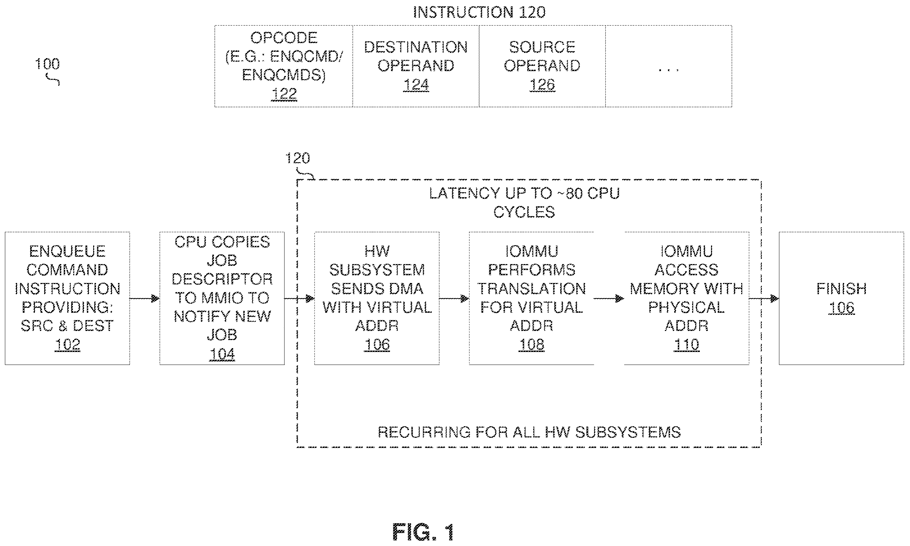

Figure 1 is a block diagram illustrating a serialized datapath pipeline associated with DMA access according to an embodiment. At block 102, an enqueue command instruction is executed by a CPU. The enqueue command instruction may include a source operand to specify a job descriptor and a destination operand to specify the recipient of the job descriptor. For example, the source operand may include an address of where the job descriptor is stored, and the destination operand may include an address (e.g., memory mapped input/output (MMIO)) associated with the hardware subsystem. An embodiment of the enqueue command instruction 120 includes an opcode 122, a destination operand 124, and a source operand 126. The destination and source operands may identify registers storing, in some embodiments, an offset and in others, an address. In particular, the source operand 126 may specify a memory location storing a 64B command or job descriptor. At block 104, the job descriptor, or the information contained therein, is stored into the target identified by the destination operand. The job descriptor may be stored into a queue, register, or local cache associated with the hardware subsystem. Next, at block 106, the hardware subsystem processes the stored job descriptor to identify the virtual addresses of required data and responsively generates one or more DMA requests for these data using the virtual addresses. These virtual addresses maybe referenced directly or indirectly in the job descriptor. At block 108, the IOMMU receives the DMA requests and translates the virtual addresses in the DMA requests into the corresponding physical addresses. Once translated, the IOMMU uses the physical addresses to access the memory and retrieves the requested data at block 110. The IOMMU then provides the retrieved data to the hardware subsystem which, in turn, performs the job. Block 120 represents the bulk of the overhead associated with DMA. The latency incurred can be as high as 80 CPU cycles and is reoccurring for all hardware subsystems.

Aspects of the present disclosure help reduce the latency associated with address translation in the IOMMU. According to embodiments of the present invention, the serialized datapath pipeline is restructured into two parallel pipelines - a modified datapath pipeline and a separate translation (pre-translation) pipeline. This allows the IOMMU to pre-translate and warm up the translation cache prior to receiving DMA requests from the hardware subsystem. In doing so, the impact of address translation on latency is minimized which, in turn, improves the overall system performance.

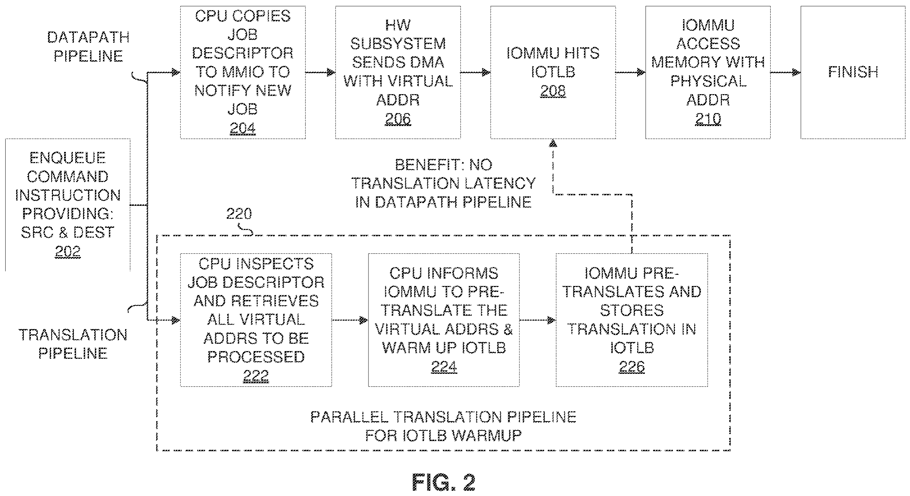

Figure 2 is a block diagram illustrating a parallel pipeline associated with DMA according to an embodiment of the present invention. Initially, a software application prepares a job descriptor in memory then calls or invokes an enqueue command instruction. At block 202, the CPU executes the enqueue command instruction (e.g., instruction 120 of Figure 1) which includes an opcode identifying the enqueue command instruction, a source operand specifying a job descriptor and a destination operand identifying the target hardware subsystem for performing the job in the job descriptor. The source and destination operands may identify registers storing an offset or an address. The source operand 126, in some embodiments, may specify a memory location storing a 64B command or job descriptor. At block 204, the job descriptor, or the information contained therein, is stored into the target identified by the destination operand, such as a queue, register, or local cache associated with the target hardware subsystem. Concurrently, at block 222, the CPU processes the job descriptor and retrieves one or more the virtual addresses referenced by the job descriptor. According to an embodiment, this includes virtual addresses that are referenced directly in the job descriptor as well as those referenced indirectly. In addition, the CPU may determine, or retrieve from the job descriptor, other information such as the bus/device/function (BDF) of the target hardware subsystem and the PASID associated with the software application or thread. The PASID may be obtained from the job descriptor itself or from another location such as a specialized register. At block 224, the CPU provides the retrieved virtual addresses directly to the IOMMU. This may be accomplished by the CPU submitting a pre-translation request through a sideband channel established between the CPU and IOMMU. In response, at block 226, the IOMMU obtains the virtual-to-physical translations for each of the virtual addresses and stores the translations locally, such as in an IOTLB, for later access.

Returning to the datapath pipeline, at block 206, as the hardware subsystem processes the job descriptor from its job queue, it identifies the data required for performing the job and responsively generates one or more DMA requests using the virtual addresses of the data. At block 208, the IOMMU receives and processes the DMA requests using the address translations that are already in the IOTLB to obtain the corresponding physical address for each virtual address in the DMA request. Next, at block 210, the IOMMU access the memory using the physical addresses and provides the retrieved data to the hardware subsystem to performs the job. Since address translations typically take much less time than job submissions to the hardware subsystem, due to the latency in the PCI MMIO/bus, it is fair to assume that when the DMA requests from the hardware subsystem reach the IOMMU, the relevant address translations are already present in the IOTLB. This allows the IOMMU to access memory without the latency of page table walks associated with address translation.

Benefits provided by aspects of the present invention include eliminating the delay of IOMMU address translation from DMA operation by performing address translations in parallel with the job submission to the hardware subsystem. This is especially useful in virtualized environments where address translations are often nested and involve multiple page tables. Aspects of the present invention also increase the performance (~80 cycles per DMA) of various hardware subsystems/devices including graphics accelerators, ethernet accelerators, crypto accelerators, data accelerators. Features of the present invention may be configurable by hypervisor software via an IOMMU interface.

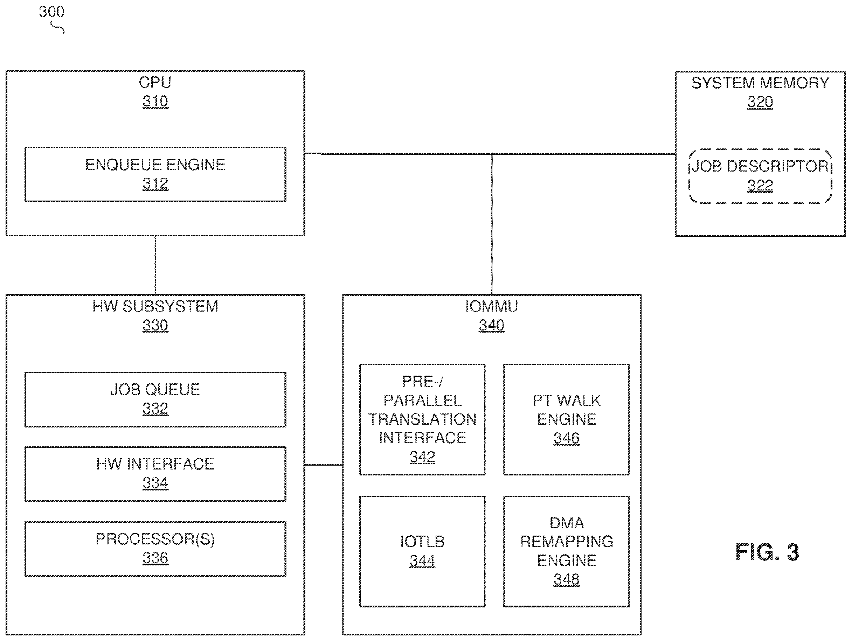

Figure 3 is a block diagram illustrating a computer systems platform on which various embodiments of the present invention may be implemented. System 300 includes CPU 310, system memory 320, hardware subsystem 330, and IOMMU 340. The CPU may additionally include an enqueue engine 312 to perform enqueue tasks. In some embodiments, the function of enqueue engine 312 is performed by an execution unit executing an enqueue command instruction. The function of the enqueue engine 312 may include storing a job or job descriptor into the job queue 332 of the hardware subsystem 332. The job queue 332 may be accessed by a hardware interface 334 which retrieves jobs to be performed by processor 336. The IOMMU 340 may include a pre-translation or parallel translation interface 342 for receiving pre-translation requests from the CPU 310, an IOTLB 344 for storing address translations, a page table walk engine 346 for obtaining address translations from page tables, and a DMA remapping engine 348 for accessing the system memory 320 using the translated addresses.

In operation, a software application or thread submits a job by calling an enqueue command instruction which specifies a job descriptor 322 stored in the system memory 320. The enqueue engine 312 in the CPU, in response to the execution of the enqueue command instruction, initiates a pre-translation pipeline along with a data path pipeline. The pre-translation pipeline begins by the CPU 310 evoking the pre/parallel translation interface 342 provided by IOMMU 340 to submit a pre-translation request. The interface provided by IOMMU may be implemented as a register set or a hidden channel (i.e. side channel). Information provided in the pre-translation request may include the BDF of the hardware subsystem, PASID of the software application/thread, and/or one or more virtual addresses to be translated. The BDF and PASID may be used by the page table walk engine 346 to identify the page table from which address translations are obtained. Next, The IOMMU 340, upon receiving pre-translation request from the pre-translation pipeline, begins translating the virtual addresses. If a translation is not available locally (i.e. missing in IOTLB 344), the page table walk engine 346 searches one or more page tables to find the address translation. For example, depending on the translation mode configured for the hardware subsystem and/or the PASID, the page table walk engine may access the translation table of the hardware subsystem (i.e. second level page table) and/or the host page table (i.e. first level page table) to retrieve the desired physical address translation. Next, upon successful completion of the page table walk, the page table walk engine 346 inserts the virtual-to-physical translation into the IOTLB 344.

Concurrently with the translation pipeline, the datapath pipeline begins with the enqueue engine 312 storing the job descriptor into the job queue 332 of the hardware subsystem 330. From the job queue 332, jobs are dispatched to the hardware interface 334 to be processed by the processor 336. During the processing, one or more DMA requests containing host virtual addresses or I/O virtual addresses (IOVA) are submitted to the IOMMU or root complex to access data. Since the translations for the virtual addresses or IOVAs are likely available in IOTLB already from the pre-translation pipeline, the DMA remapping engine can quickly perform memory operations using the cached address translations without costly page table walks. It is reasonable to assume that the pre-translation pipeline will complete before the datapath pipeline because memory transactions performed in the pre-translation pipeline are inherently faster than the PCI MMIO transactions in the datapath pipeline.

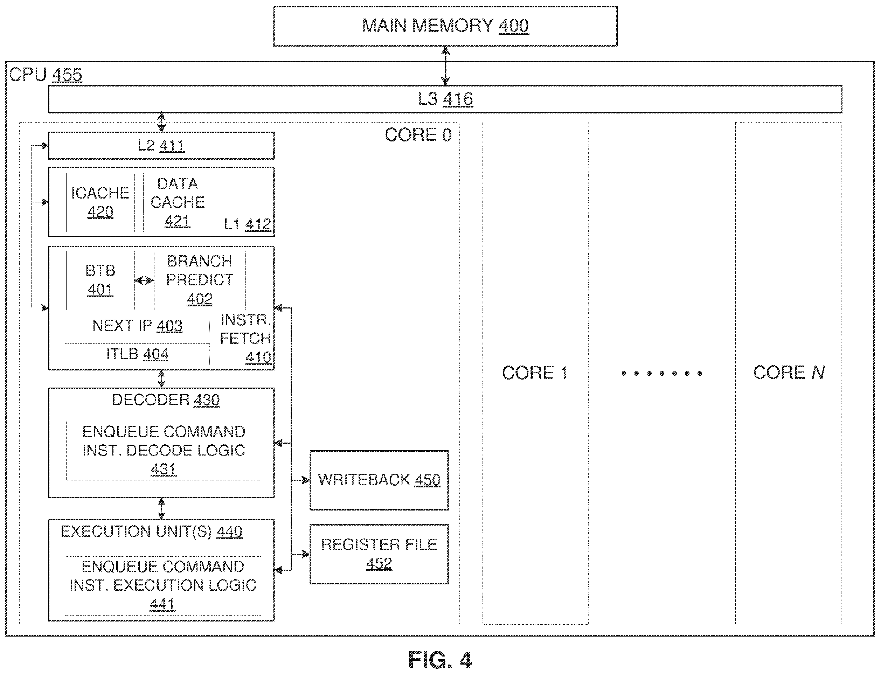

Figure 4 illustrates an exemplary processor on which embodiments of the invention may be implemented. CPU 455 may include one or more processor cores. The details of a single processor core ("Core 0") are illustrated in Figure 4 for simplicity. It will be understood, however, that each core shown in Figure 4 may have the same or similar set of components as Core 0. For example, each core may include dedicated Level 1 (L1) cache 412 and Level 2 (L2) cache 411 for caching instructions and data according to a specified cache management policy. The L1 cache 412 may additionally include an instruction cache 420 for storing instructions and a data cache 421 for storing data. The instructions and data stored within the various processor caches are managed at the granularity of cache lines which may be a fixed size (e.g., 64, 128, 512 Bytes in length). Data may be stored temporarily in register file 452 during the execution of instructions. Register file 452 may include general purpose registers (GPRs), vector registers, mask registers, etc. Each processor core further includes an instruction fetch unit 410 for fetching instructions from main memory 400 and/or a shared Level 3 (L3) cache 416; a decoder or decode unit 430 for decoding the instructions (e.g., decoding program instructions into micro-operatons or "uops"); an execution unit 440 for executing the instructions; and a writeback unit 450 for retiring instructions and writing back results.

The instruction fetch unit 410 may include various well known components including a next instruction pointer 403 for storing the address of the next instruction to be fetched from memory 400 (or one of the caches); an instruction translation look-aside buffer (ITLB) 404 for storing a map of recently used virtual-to-physical instruction addresses to improve the speed of address translation; a branch prediction unit 402 for speculatively predicting instruction branch addresses; and branch target buffers (BTBs) 401 for storing branch addresses and target addresses. Once fetched, instructions are streamed to the remaining stages of the instruction pipeline including the decode unit 430, the execution unit 440, and the writeback unit 450. The structure and function of each of these units is well understood by those of ordinary skill in the art and will not be described here in detail to avoid obscuring the pertinent aspects of the different embodiments of the invention.

In one embodiment, the decode unit 430 includes an enqueue command instruction decoder 431 for decoding the enqueue command instructions described herein (e.g., into sequences of micro-operations in one embodiment) and the execution unit 440 includes an enqueue command instruction execution unit 441 for executing the decoded enqueue command instructions.

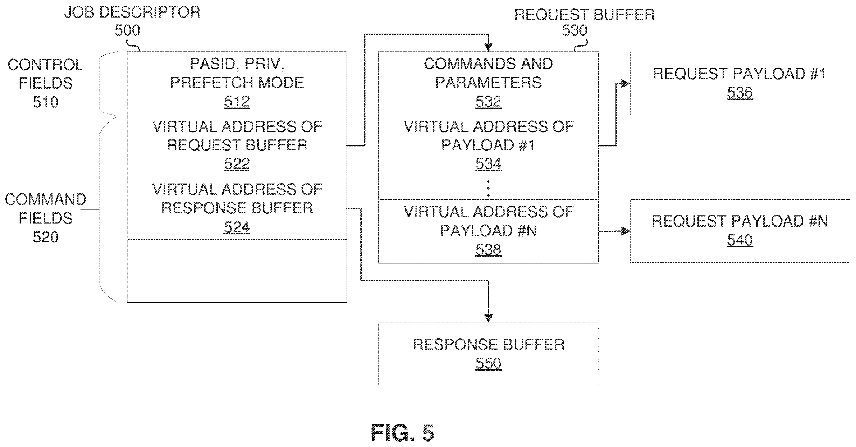

Figure 5 is a diagram illustrating an exemplary job descriptor according to an embodiment. Job descriptor 500 may include control fields 510 and command fields 520. The control fields 510 store information such as the PASID associated with the software application/thread that created the job descriptor, the privilege level associated with the job descriptor, and a prefetch mode to indicate whether address pre-translation should be performed for the addresses referenced in job descriptor. The command field 520 may include pointers (e.g., 522 and 524) to other descriptors such as the request buffer descriptor 530 and response buffer descriptor 550. The pointers may be virtual addresses or physical addresses of memory locations. In some embodiments, all of the pointers are virtual addresses and need to be translated to corresponding physical addresses before they can be used to access memory.

The request buffer 530 pointed to by pointer 522 may store command and parameters 532 for specifying the action(s) to be taken by the target hardware subsystem. In addition, the request buffer 530 may store pointers to scattered payloads that need to be processed by the hardware subsystem. For example, request buffer 530 may store pointers 534 and 536 which are the memory addresses of where payloads 536 and 540 are stored, respectively. The CPU, as part of the translation pipeline, parses the job descriptor 500 and locates all of the addresses that require translation. For example, the CPU may determine from the job descriptor:
- Virtual address of the request buffer descriptor 522
- Virtual address of the response buffer descriptor 524
- Virtual addresses of the payloads 534, 538

According to an embodiment, the virtual address of the request buffer descriptor 522 and response buffer descriptor 524 are stored in the job descriptor 500 and are thus referenced directly in the job descriptor 500. On the other hand, the virtual addresses of payloads 534 and 538 are stored in secondary descriptors (request buffer 530) and are thus indirectly referenced in job descriptor 500. According to an embodiment, all of these virtual addresses will be retrieved by the CPU and provided to the IOMMU via a sideband channel to be pre-translated. In order to parse the job descriptor for different types of hardware subsystems and devices, a standardized format may be defined for the job descriptor to be used with the enqueue command instruction. The standardized format may enable the CPU to identify both directly-referenced and indirectly-referenced virtual addresses more efficiently and accurately.

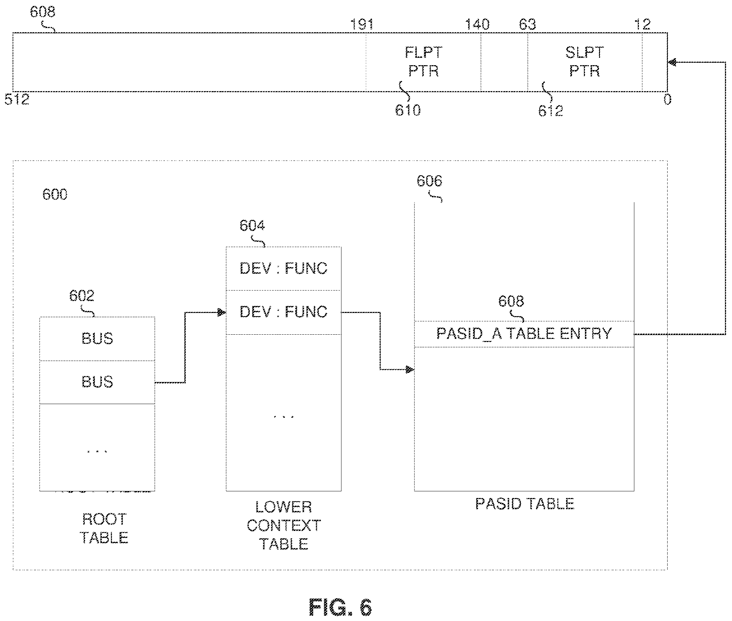

Figure 6 illustrates an IOMMU PASID table structure according to an embodiment. The IOMMU PASID Table Structure 600 includes root table 602, lower context table 604, and PASID table 606. As part of the pre-translation request, the CPU provides the IOMMU with the BDF of the hardware subsystem and the PASID of the software application/thread. To look up the appropriate page table containing the relevant address translations, the IOMMU uses the BDF to look up, in the root table 602 and the lower context table 604, the appropriate PASID table 606 for the hardware subsystem. Then, using the PASID, the IOMMU locates PASID table entry 608 containing the pointers (e.g., first level page table pointer 610 and second level page table pointer 612) to the appropriate page table(s).

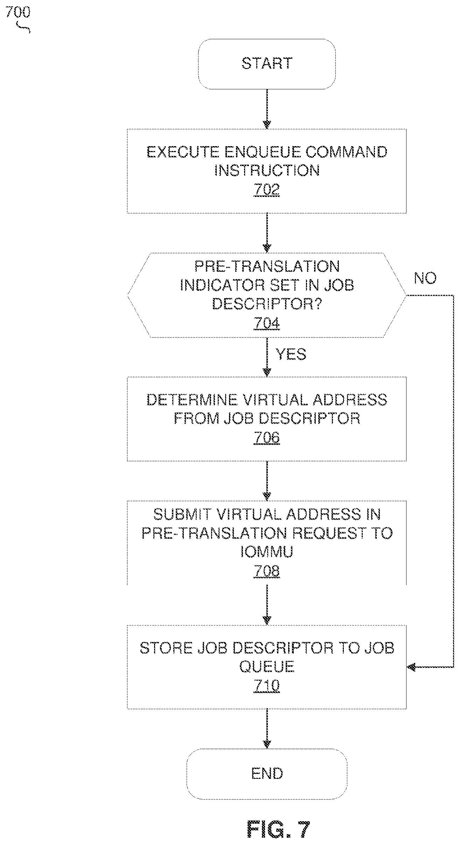

Figure 7 is a flow diagram illustrating operations associated with the execution of an enqueue instruction according to an embodiment. The illustrated operations may be performed by a processor, such as CPU 310 of Figure 3. At block 702, an enqueue instruction is executed by the execution unit of a processor. The enqueue instruction may include source and destination operands. The source operand may be used to identify a job descriptor and the destination operand may be used to identify a hardware subsystem. At block 704, a determination is made on whether addresses referenced by the job descriptor should be pre-translated. The determination may be made based on a pre-translation indicator (i.e. prefetch mode) of the job descriptor. According to an embodiment, if the pre-translation indicator is of a first value (e.g., "0") indicating that no pre-translation should be performed, then the job descriptor is simply stored to a location identified by the destination operand at block 710. On the other hand, if the pre-translation indicator is of a second value (e.g., "1") indicating that pre-translation should be performed, then at block 706, one or more virtual addresses are determined from the job descriptor. As explained above, the virtual addresses may include both directly-referenced addresses as well as indirectly-referenced addresses. At block 708, these virtual addresses are submitted to the IOMMU via a pre-translation request. In addition to the virtual addresses, the pre-translation request may also include information such as the PASID and BFD associated with the hardware subsystem. This information may be determined from the job descriptor directly or obtained from elsewhere (e.g., a specific register). At block 710, the job descriptor is stored into the location identified by the destination operand.

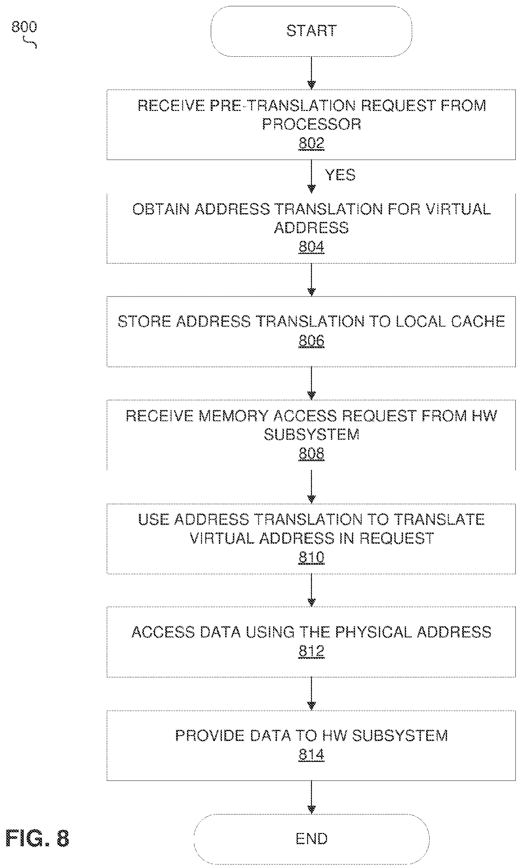

Figure 8 is a flow diagram illustrating the operations associated with the execution of a pre-translation request according to an embodiment. The illustrated operations may be performed by a memory management unit, such as the IOMMU 340 of Figure 3. At block 802, a pre-translation request is received from a processor. The pre-translation request may include one or more virtual addresses to be translated to corresponding physical addresses. The pre-translation request may also include information such as the PASID of a software application/thread and the BFD of a hardware subsystem for locating the appropriate page table. At block 804, virtual-to-physical address translation is obtained for the virtual addresses in the pre-translation request. The address translation may be obtained through page walks through one or more page tables. For example, the BDF and the PASID in the pre-translation request may be used to determine the appropriate page table(s) from which address translations are obtained as described in Figure 6. At block 806, the address translations are stored in a local cache or an IOTLB to allow for quick future access. Thereafter, a memory access request is received from a hardware subsystem at block 808. The memory access request may be a DMA request and may include one or more virtual addresses. At block 810, the address translations stored in the local cache or the IOTLB are used to translate at least some of the virtual addresses in the memory access request into corresponding physical addresses. Then data in the memory hierarchy is accessed based on these physical addresses at block 812 and the accessed data is provided to the hardware subsystem at block 814.

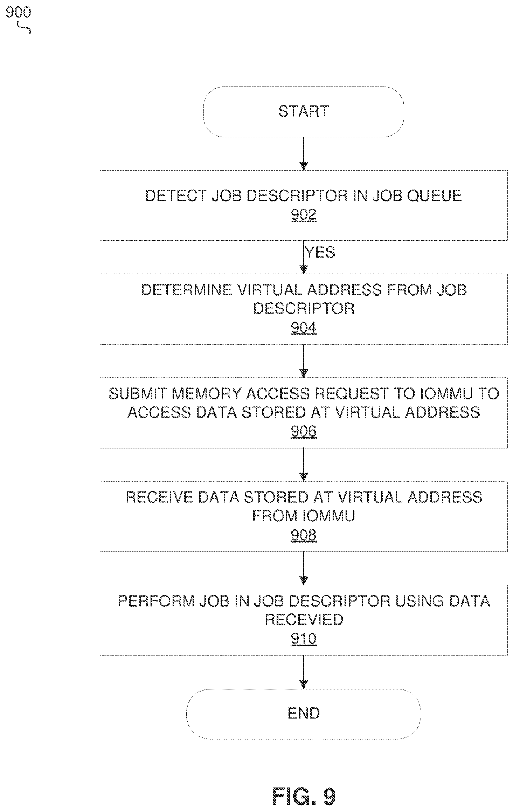

Figure 9 is a flow diagram illustrating the operations for processing a job descriptor from the job queue according to an embodiment. The illustrated operations may be performed by any suitable hardware subsystem (e.g., 330 of Figure 3), including accelerators and PCI devices. At block 902, a job descriptor is detected in the job queue. At block 904, one or more virtual addresses is determined from the job descriptor. The virtual addresses reference the memory location of where data needed to perform a job or workload are stored. At block 906, one or more memory access requests are submitted to a memory management unit to access data stored at these virtual addresses. Responsive to the memory access requests, data is received from the memory management unit at block 908. Then, at block 910, the job or workload described in the job descriptor is performed using the received data.

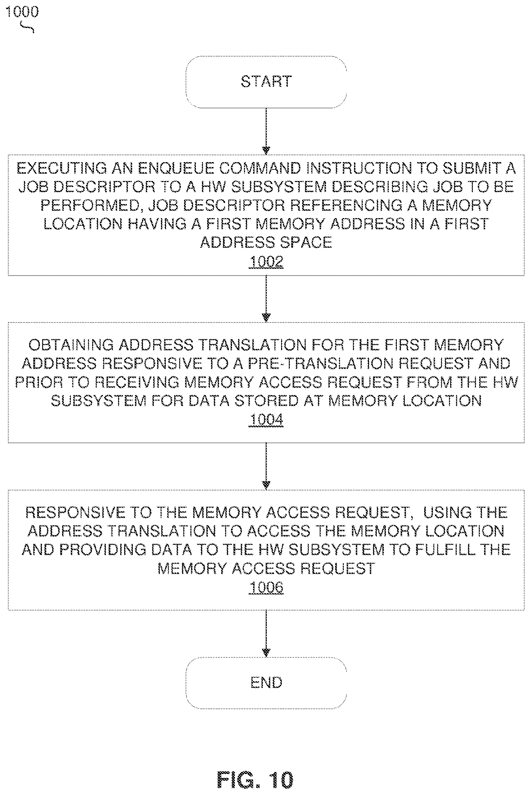

Figure 10 is a flow diagram illustrating a method according to an embodiment of the present invention. The method 1000 may be performed by any system described herein. At block 1002, an enqueue command instruction is executed by a CPU to submit a job descriptor to a hardware subsystem. The job descriptor describes a job to be performed and references a memory location associated with a first memory address in a first address space. At block 1004, an address translation for the first memory address is obtained by the IOMMU responsive to a pre-translation request from the CPU. The address translation may include a mapping of the first memory address in the first address space to a second memory address in a second address space. The address translation is obtained prior to the IOMMU receiving a memory access request from the hardware subsystem requesting data stored at the memory location. At block 1006, responsive to the memory access request, the IOMMU is to access the memory location using the address translation and to provide data from the memory location to the hardware subsystem to fulfill the memory access request. The hardware subsystem, in turn, uses the data returned from the IOMMU to perform the job described in the job descriptor.

### Submitting Common Control Command to Hardware Subsystem Using Enqueue Command Instruction

There are several benefits for using enqueue command instructions and job descriptors to submit jobs to hardware subsystems. Besides simplifying the job submission process by hiding hardware semantics from software applications as mentioned above, another benefit of using the enqueue command instruction is the automatic translation of process address space identifiers (PASIDs).

PASIDs are used to share a single hardware subsystem across multiple software threads or processes while providing each thread or process with a corresponding address space. PASID can be extended to virtualized environments through the concept of guest PASIDs (gPASID) and host PASIDs (hPASID). Virtual machines in the virtualized environment operate using guest PASIDs while the hypervisor and/or the underlying hardware operate using host PASIDs. Each task submitted by a software thread in the VM is associated with a guest PASID which must be translated into a corresponding host PASID. This translation task is typically performed by the hypervisor.

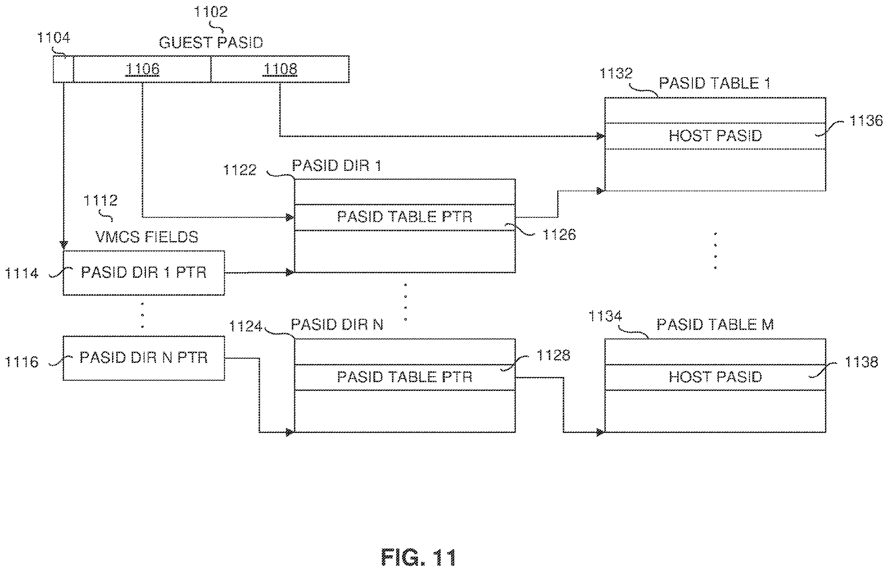

With an enqueue command instruction, the translation of guest PASID into host PASID is handled by hardware via virtual machine extensions and PASID translation tables. Figure 11 illustrates the operations for translating a guest PASID to a host PASID using a PASID translation table structure according to an embodiment. To translate a guest PASID 1102, a PASID directory indicator 1104 is used to identify a PASID directory pointer (e.g., 1114 or 1116) from a virtual machine control structure (VMCS) field 1112 to locate a PASID directory (e.g., 1122 or 1124). A second portion 1106 of the guest PASID is then used to identify a particular entry (e.g., 1126 or 1128) in the PASID directory to locate a PASID table (e.g., 1132 or 1134). Finally, a third portion 1108 of the guest PASID 1102 is used to locate an entry in the PASID table containing the corresponding host PASID (e.g., 1136 or 1138) of the guest PASID.

Using an enqueue command instruction means that fewer PASID translations need to be performed by the hypervisor. However, enqueue command instructions are currently used mainly for submitting device-specific workloads/commands and do not support the submission of control commands, which are commands for controlling common operations shared between hardware subsystems.

In a VM environment, control commands are frequently used during VM transitions. For example, the control command PASID reset is typically triggered each time when a guest application shuts down. The purpose of the PASID reset command is to inform the hardware subsystem to go through the pending queue and remove all inflight requests associated with an application-assigned host PASID to release resources. The PASID drain command is another control command often used during live migration to instruct the hardware subsystem to gracefully process all inflight requests of a specific application-assigned host PASID. Each time a control command is issued by a software application or thread, the guest PASID in the command must be translated by the hypervisor into a corresponding host PASID, incurring high overhead in the process.

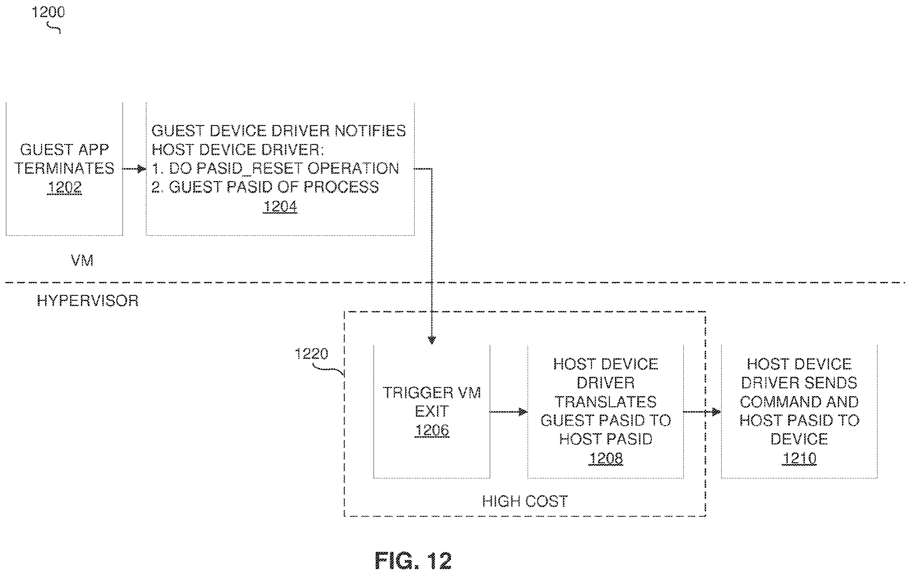

Figure 12 illustrates an exemplary flow of a PASID reset control command according to an embodiment. At 1202, a guest application running in a virtual machine terminates. At 1204, a guest device driver notifies the host device driver to instruct the hardware device to perform a PASID reset command. The guest PASID associated with the guest application is provided with the command. At 1206, the hypervisor triggers a VM exit. At 1208, the host device driver of the hypervisor translates the guest PASID to host PASID. The translation may be performed using the PASID table structure and the guest PASID as detailed above. At 1210, the host device driver sends the command and the host PASID (e.g., "PASID_RESET(host PASID)") to the hardware device. Box 1220 illustrate the bulk of the overhead for the hypervisor.

Embodiments of the present invention extends the enqueue command instruction to include the ability to submit control commands. This helps eliminate hypervisor context switch for common command submission in a VM, thereby reduces the burden on the hypervisor software and increases performance. In one embodiment, the format of the job descriptor includes a command type field to indicate whether the command in the job descriptor is a control command. When the job descriptor is enqueued into the job queue of the hardware subsystem, the command type field is copied over to the job queue. In another embodiment, the control type field is added to the entries in the job queue. When a special form of the enqueue command instruction is executed by the CPU, the job descriptor is stored or copied to the entry in the job queue, and the command type field of the entry is automatically updated to indicate that the job descriptor contains a control command. In some embodiments, the job queue is comprised of one or more registers.

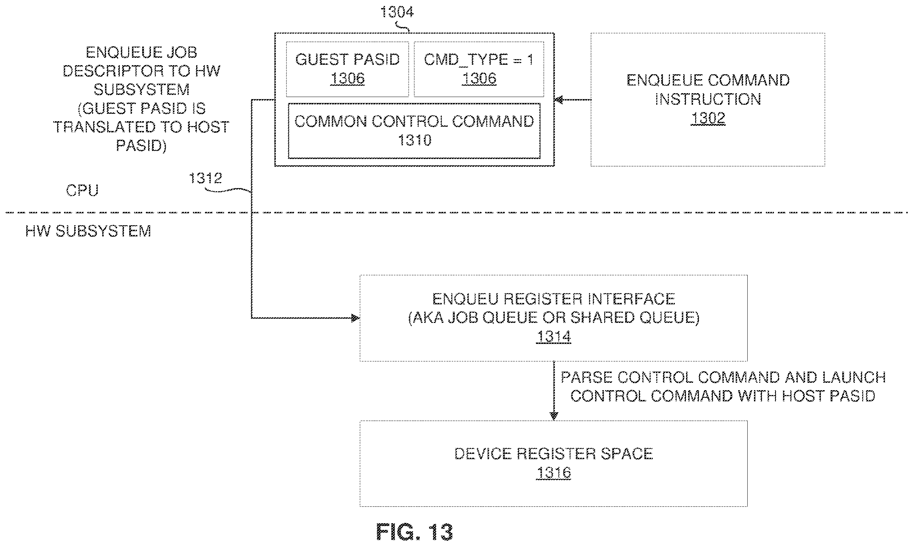

Figure 13 is a diagram illustrating the flow of using an enqueue command instruction to submit a control command according to an embodiment. As illustrated, a CPU executes an enqueue command instruction 1302 and processes the job descriptor 1304 referenced by the instruction. The job descriptor 1304 contains a common control command 1310, the guest PASID 1306 associated with the software thread submitting the job descriptor, and a command type indicator 1306 set to a particular value (e.g., "1") to indicate that the job descriptor contains a common control command. As the enqueue command instruction is executed, the job descriptor 1304 is enqueued to a target hardware subsystem via an enqueue register interface 1314, such as a job queue or shared queue. Next, the job descriptor is parsed and the control command 1310 is launched with the host PASID. The control command 1314 may be stored in the device register space 1316 and associated with the host PASID.

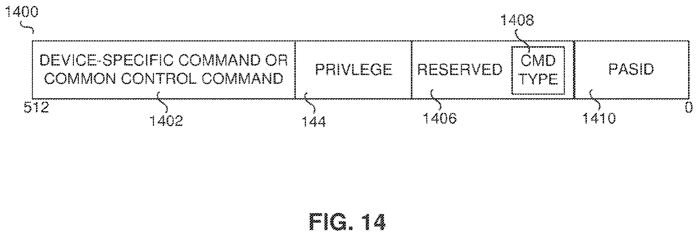

Figure 14 illustrates an entry of the job queue according to an embodiment. Entry 1400 includes a command 1402 which can be a common control command, such as the PASID reset command or the PASID drain command described above, or a device-specific command. Entry 1400 also includes fields such as privilege mode 1404 and PASID 1410. The PASID 1410 in entry 1400 is a host PASID translated from a corresponding guest PASID during the execution of an enqueue command instruction by the CPU. One or more bits in a reserved section 1406 of the entry 1400 is used to create a new command type field 1408 to indicate the type of command that is in the command field 1402. For example, if the command type field 1408 is set to a first value (e.g., 0), the command in the command field 1402 is a device-specific command. If the command type field 1408 is set to a second value (e.g., 1), the command in the command field 1402 is a common control command. While the job queue entry 1400, as illustrated, contains 8 bytes. It will be apparent to one in skill in the art that the job queue entry may be of any suitable size (8, 16, 32 bytes, etc.). According to an embodiment, the job descriptor contains the same or similar fields as the job queue entry 14, with the exception that the PASID field in the job descriptor contains a guest PASID instead of a host PASID.

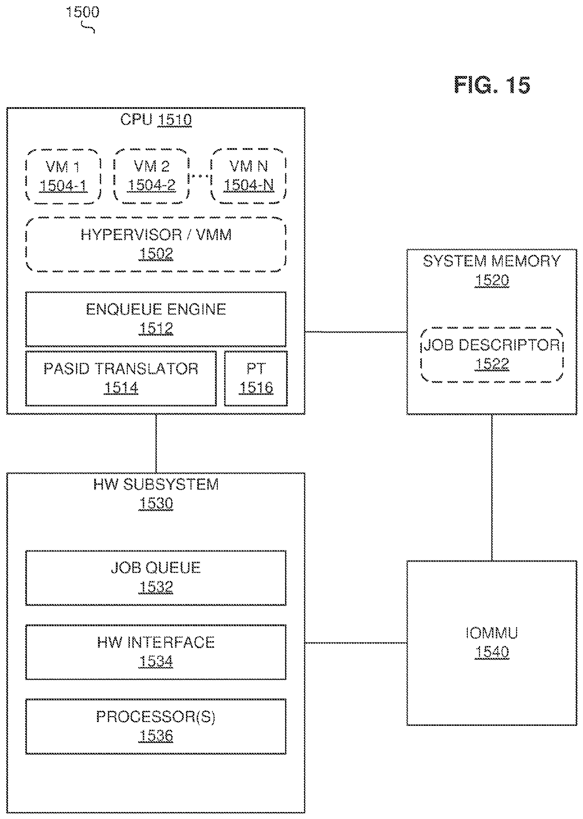

Figure 15 is a block diagram illustrating an embodiment of a computer system on which various aspects of the present invention may be implemented. System 1500 includes a CPU 1510, system memory 1520, hardware subsystem or device 1530, and IOMMU 1540. One or more virtual machines 1504 may be executed on the CPU 1510. The virtual machines 1504 may communicate with the underlying hardware via a hypervisor or virtual machine manager 1502. To submit a job or workload to the hardware subsystem, a software application running on the virtual machine creates a job descriptor 1522 in system memory 1520 and calls an enqueue command instruction referencing the job descriptor 1522. Responsive to the enqueue command instruction, an enqueue engine 1512 stores or copies the job descriptor 1522 into the job queue 1532. An execution unit (not shown) configured to execute the enqueue command instruction may perform the functions of the enqueue engine 1512. As part of the execution of the enqueue command instruction, a guest PASID in, or associated with, the job descriptor 1522 is automatically translated to a corresponding host PASID by the PASID translator 1514. One or more page tables 1516 may be accessed by the PASID translator 1514 to perform the translation. According to an embodiment, the guest PASID in the job descriptor is replaced by the translated host PASID when the job descriptor, or information contained therein, is stored into the job queue 1532. The job descriptors in the job queue 1532 are retrieved by hardware interface 1534 to be processed by the processor 1536 of the hardware subsystem 1530. Processor 1536 may determine, based on a command type field in the job descriptor, whether the job or command to be performed is a device-specific command or a common control command. By using the enqueue command instruction, the translation from guest PASID to host PASID is performed by PASID translator 1514 without the assistance of the hypervisor 1502.

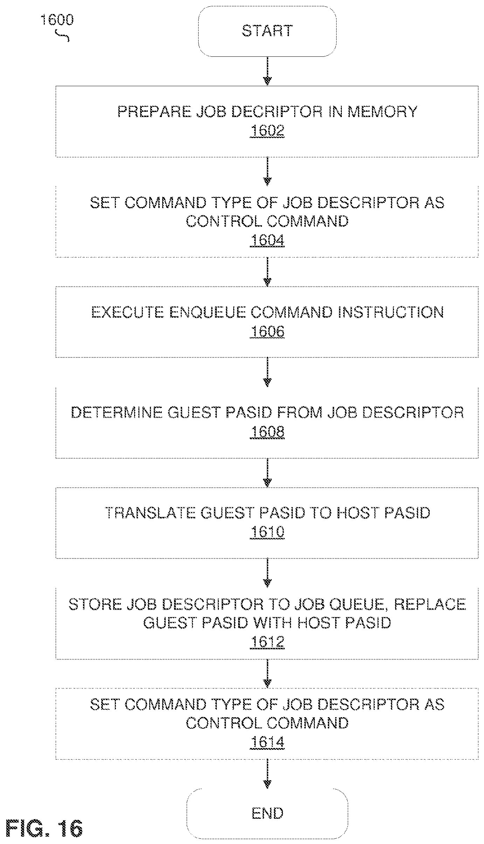

Figure 16 is a flow diagram illustrating a method for submitting a common control command using an enqueue command instruction according to an embodiment. At 1602, a software prepares a job descriptor (e.g., a 64-byte descriptor) in system memory. The software may optionally, at 1604, set a command type field in the job descriptor to a specific value (e.g., "1") to indicate that the command in the job descriptor is a common control command. At 1606, the enqueue command instruction is executed. As part of executing the enqueue command instruction, a guest PASID is extracted from the job descriptor at 1608 and translated to a corresponding host PASID at 1610. At 1612, the job descriptor is copied or stored into an entry of the job queue of the hardware subsystem. The guest PASID in the job descriptor is replaced with the translated host PASID. At 1614, the command type field in the job queue entry is optionally set to a specific value (e.g., "1") to indicate that the command in the entry is a common control command as opposed to a device-specific command. The command type field in the entry may be set, according to an embodiment, if a specialized version of the enqueue command instruction is executed. The specialized version of the enqueue command instruction may be an instruction used only for enqueueing common control commands. Thus, instead of setting the control command type field when preparing the job descriptor, the software needs only to call this specialized enqueue command instruction after constructing the job descriptor as normal.

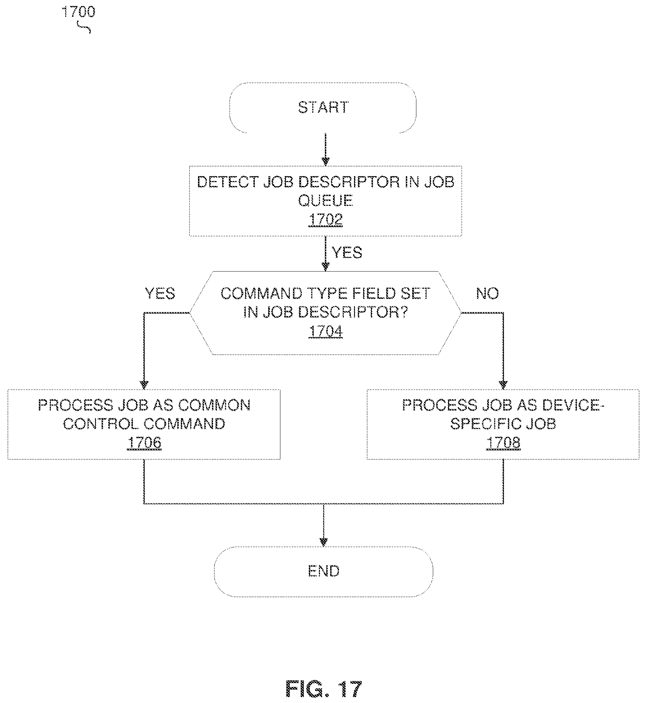

Figure 17 is a flow diagram illustrate a method for processing job descriptors from the job queue according to an embodiment. Method 1700 may be implemented by any system described herein. In particular, method 1700 may be performed by a hardware system or device. At 1702, job descriptor in a job queue is detected. The command type field in the job descriptor is checked at 1704. If the command type field indicates that the job descriptor does not contain a common control command, the command is processed as a device-specific command at 1708. On the other hand, if the command type field indicates that the job descriptor contains a common control command, the command is processed as a common control command. Examples of common control commands include, but not limited to:
- PASID Reset: Cleanup all inflight requests and resource in the hardware device associate with a software application.
- PASID Drain: Graceful processing of all inflight requests (e.g. due to a device migration).
- PASID Abort: Ungraceful termination of all inflight requests in case of a PASID drain timeout.
- User Level Interrupt (ULI) Enable: Subscribe a software application to the User Level Interrupt
- User Level Interrupt (ULI) Disable: Unsubscribe an application from the User Level Interrupt

The use of enqueue command instructions to submit common control commands increases CPU performance because the virtual machines do not need to trap into the hypervisor for translating guest PASID. This also provides a generic and simple way that all device manufacturers can adopt for common control commands so that they no longer need to define their own interface/format for common control commands. Moreover, since embodiments of the present invention is an extension to the enqueue command instruction, it is compatible with the existing instruction set architecture (ISA). The common format is also generic across various types of hardware or PCI devices, including network adapters, graphics accelerators, data accelerators, etc.

### Examples

The following are example implementations of different embodiments of the invention.

Example 1. An apparatus that includes a hardware translator to translate process address space identifiers (PASIDs); a memory to store a job descriptor specifying a first PASID and a command that is either a device-specific command or a common control command, and a processor to execute an enqueue command instruction to store into a job queue an entry that includes the command from the job descriptor, a second PASID translated from the first PASID by the hardware translator, and a command type field. The apparatus further includes a hardware subsystem to process the entry from the job queue, wherein the hardware subsystem is to execute the command as a device-specific command when the command type field is of a first value and as a common control command when the command type field is of a second value.

Example 2. The apparatus of Example 1, wherein the first PASID is a virtual PASID and the second PASID is a host PASID.

Example 3. The apparatus of Example 1, wherein the first PASID is associated with a software thread executing in a virtual machine on the processor.

Example 4. The apparatus of Example 3, wherein the job descriptor is stored into the memory by the software thread.

Example 5. The apparatus of Example 3, wherein the job descriptor includes a command type field set by the software thread.

Example 6. The apparatus of Example 3, wherein the command type field in the entry is set by the processor when executing the enqueue command instruction.

Example 7. The apparatus of Example 1, wherein the hardware translator automatically translates the first PASID to the second PASID responsive to an execution of the enqueue command instruction by the processor.

Example 8. The apparatus of Example 1, wherein the hardware translator is to translate the first PASID to the second PASID by traversing a PASID translation table structure.

Example 9. The apparatus of Example 1, wherein the common control command is a PASID reset command which, when executed by the hardware subsystem, causes the hardware subsystem to remove from the job queue all entries associated with the second PASID.

Example 10. The apparatus of Example 1, wherein the common control command is a PASID drain command which, when executed by the hardware subsystem, causes the hardware subsystem to process all entries in the job queue that are associated with the second PASID.

Example 11. The apparatus of Example 1, wherein the common control command is a PASID abort command which, when executed by the hardware subsystem, causes the hardware subsystem to remove from the job queue all entries associated with the second PASID responsive to a PASID drain timeout.

Example 12. The apparatus of Example 1, wherein the common control command is a user level interrupt enablement command which, when executed by the hardware subsystem, causes the hardware subsystem to subscribe a software thread associated with the second PASID to a user level interrupt.

Example 13. The apparatus of Example 1, wherein the common control command is a user level interrupt disablement command which, when executed by the hardware subsystem, causes the hardware subsystem to unsubscribe a software thread associated with the second PASID to a user level interrupt.

Example 14. A method that includes: storing a job descriptor in a memory, the job descriptor specifying a command and a first PASID, the command comprising one of a device-specific command or a common control command; executing, by a processor, an enqueue command instruction to enqueue an entry into a job queue, the entry comprising the command from the job descriptor, a second PASID translated from the first PASID by a hardware translator, and a command type field; and executing the command, by a hardware subsystem, as a device-specific command when the command type field is of a first value and as a common control command when the command type field is of a second value.

Example 15. The method of Example 14, wherein the first PASID is a virtual PASID and the second PASID is a host PASID.

Example 16. The method of Example 14, wherein the first PASID is associated with a software thread executing in a virtual machine on the processor.

Example 17. The method of Example 16, wherein the job descriptor is stored into the memory by the software thread.

Example 18. The method of Example 16, wherein the job descriptor includes a command type field set by the software thread.

Example 19. The method of Example 16, wherein executing the enqueue command instruction further includes setting the command type field in the entry.

Example 20. The method of Example 14, wherein executing the enqueue command instruction further includes translating the first PASID to the second PASID.

Example 21. The method of Example 14, wherein translating the first PASID to the second PASID further includes traversing a PASID translation table structure.

Example 22. The method of Example 14, wherein executing the command as a common control command includes removing from the job queue all entries associated with the second PASID.

Example 23. The method of Example 14, wherein executing the command as a common control command includes processing all entries in the job queue that are associated with the second PASID.

Example 24. The method of Example 14, wherein executing the command as a common control command includes removing from the job queue all entries associated with the second PASID responsive to a PASID drain timeout.

Example 25. The method of Example 14, wherein executing the command as a common control command includes subscribing a software thread associated with the second PASID to a user level interrupt.

Example 26. The method of Example 14, wherein executing the command as a common control command includes unsubscribing a software thread associated with the second PASID to a user level interrupt.

### Exemplary Processor Architectures and Data Types

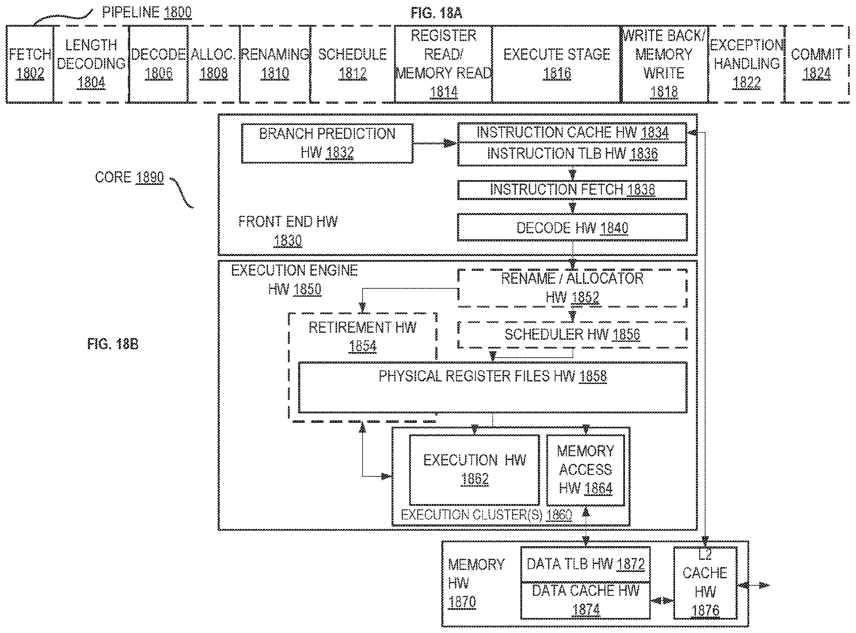

**Figure 18A** is a block diagram illustrating both an exemplary in-order pipeline and an exemplary register renaming, out-of-order issue/execution pipeline according to embodiments of the invention. Figure 18B is a block diagram illustrating both an exemplary embodiment of an in-order architecture core and an exemplary register renaming, out-of-order issue/execution architecture core to be included in a processor according to embodiments of the invention. The solid lined boxes in Figures 18A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In Figure 18A, a processor pipeline 1800 includes a fetch stage 1802, a length decode stage 1804, a decode stage 1806, an allocation stage 1808, a renaming stage 1810, a scheduling (also known as a dispatch or issue) stage 1812, a register read/memory read stage 1814, an execute stage 1816, a write back/memory write stage 1818, an exception handling stage 1822, and a commit stage 1824.

**Figure 18B** shows processor core 1890 including a front end hardware 1830 coupled to an execution engine hardware 1850, and both are coupled to a memory hardware 1870. The core 1890 may be a reduced instruction set computing (RISC) core, a complex instruction set computing (CISC) core, a very long instruction word (VLIW) core, or a hybrid or alternative core type. As yet another option, the core 1890 may be a special-purpose core, such as, for example, a network or communication core, compression engine, coprocessor core, general purpose computing graphics processing unit (GPGPU) core, graphics core, or the like.

The front end hardware 1830 includes a branch prediction hardware 1832 coupled to an instruction cache hardware 1834, which is coupled to an instruction translation lookaside buffer (TLB) 1836, which is coupled to an instruction fetch hardware 1838, which is coupled to a decode hardware 1840. The decode hardware 1840 (or decoder) may decode instructions, and generate as an output one or more micro-operations, micro-code entry points, microinstructions, other instructions, or other control signals, which are decoded from, or which otherwise reflect, or are derived from, the original instructions. The decode hardware 1840 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1890 includes a microcode ROM or other medium that stores microcode for certain macroinstructions (e.g., in decode hardware 1840 or otherwise within the front end hardware 1830). The decode hardware 1840 is coupled to a rename/allocator hardware 1852 in the execution engine hardware 1850.

The execution engine hardware 1850 includes the rename/allocator hardware 1852 coupled to a retirement hardware 1854 and a set of one or more scheduler hardware 1856. The scheduler hardware 1856 represents any number of different schedulers, including reservations stations, central instruction window, etc. The scheduler hardware 1856 is coupled to the physical register file(s) hardware 1858. Each of the physical register file(s) hardware 1858 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) hardware 1858 comprises a vector registers hardware, a write mask registers hardware, and a scalar registers hardware. This register hardware may provide architectural vector registers, vector mask registers, and general purpose registers. The physical register file(s) hardware 1858 is overlapped by the retirement hardware 1854 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement hardware 1854 and the physical register file(s) hardware 1858 are coupled to the execution cluster(s) 1860. The execution cluster(s) 1860 includes a set of one or more execution hardware 1862 and a set of one or more memory access hardware 1864. The execution hardware 1862 may perform various operations (e.g., shifts, addition, subtraction, multiplication) and on various types of data (e.g., scalar floating point, packed integer, packed floating point, vector integer, vector floating point). While some embodiments may include a number of execution hardware dedicated to specific functions or sets of functions, other embodiments may include only one execution hardware or multiple execution hardware that all perform all functions. The scheduler hardware 1856, physical register file(s) hardware 1858, and execution cluster(s) 1860 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler hardware, physical register file(s) hardware, and/or execution cluster - and in the case of a separate memory access pipeline, certain embodiments are implemented in which only the execution cluster of this pipeline has the memory access hardware 1864). It should also be understood that where separate pipelines are used, one or more of these pipelines may be out-of-order issue/execution and the rest in-order.

The set of memory access hardware 1864 is coupled to the memory hardware 1870, which includes a data TLB hardware 1872 coupled to a data cache hardware 1874 coupled to a level 2 (L2) cache hardware 1876. In one exemplary embodiment, the memory access hardware 1864 may include a load hardware, a store address hardware, and a store data hardware, each of which is coupled to the data TLB hardware 1872 in the memory hardware 1870. The instruction cache hardware 1834 is further coupled to a level 2 (L2) cache hardware 1876 in the memory hardware 1870. The L2 cache hardware 1876 is coupled to one or more other levels of cache and eventually to a main memory.

By way of example, the exemplary register renaming, out-of-order issue/execution core architecture may implement the pipeline 1800 as follows: 1) the instruction fetch 1838 performs the fetch and length decoding stages 1802 and 1804; 2) the decode hardware 1840 performs the decode stage 1806; 3) the rename/allocator hardware 1852 performs the allocation stage 1808 and renaming stage 1810; 4) the scheduler hardware 1856 performs the schedule stage 1812; 5) the physical register file(s) hardware 1858 and the memory hardware 1870 perform the register read/memory read stage 1814; the execution cluster 1860 perform the execute stage 1816; 6) the memory hardware 1870 and the physical register file(s) hardware 1858 perform the write back/memory write stage 1818; 7) various hardware may be involved in the exception handling stage 1822; and 8) the retirement hardware 1854 and the physical register file(s) hardware 1858 perform the commit stage 1824.

The core 1890 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1890 includes logic to support a packed data instruction set extension (e.g., AVX1, AVX2, and/or some form of the generic vector friendly instruction format (U=0 and/or U=1), described below), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

While register renaming is described in the context of out-of-order execution, it should be understood that register renaming may be used in an in-order architecture. While the illustrated embodiment of the processor also includes separate instruction and data cache hardware 1834/1874 and a shared L2 cache hardware 1876, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

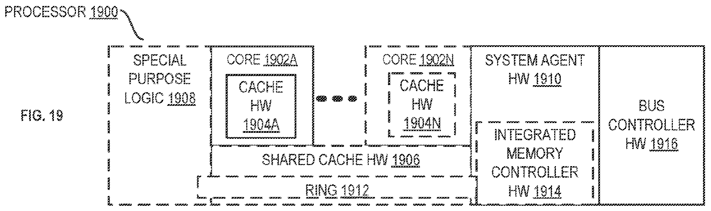

**Figure 19** is a block diagram of a processor 1900 that may have more than one core, may have an integrated memory controller, and may have integrated graphics according to embodiments of the invention. The solid lined boxes in Figure 19 illustrate a processor 1900 with a single core 1902A, a system agent 1910, a set of one or more bus controller hardware 1916, while the optional addition of the dashed lined boxes illustrates an alternative processor 1900 with multiple cores 1902A-N, a set of one or more integrated memory controller hardware 1914 in the system agent hardware 1910, and special purpose logic 1908.

Thus, different implementations of the processor 1900 may include: 1) a CPU with the special purpose logic 1908 being integrated graphics and/or scientific (throughput) logic (which may include one or more cores), and the cores 1902A-N being one or more general purpose cores (e.g., general purpose in-order cores, general purpose out-of-order cores, a combination of the two); 2) a coprocessor with the cores 1902A-N being a large number of special purpose cores intended primarily for graphics and/or scientific (throughput); and 3) a coprocessor with the cores 1902A-N being a large number of general purpose in-order cores. Thus, the processor 1900 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1900 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache hardware 1906, and external memory (not shown) coupled to the set of integrated memory controller hardware 1914. The set of shared cache hardware 1906 may include one or more mid-level caches, such as level 2 (L2), level 3 (L3), level 4 (L4), or other levels of cache, a last level cache (LLC), and/or combinations thereof. While in one embodiment a ring based interconnect hardware 1912 interconnects the integrated graphics logic 1908, the set of shared cache hardware 1906, and the system agent hardware 1910/integrated memory controller hardware 1914, alternative embodiments may use any number of well-known techniques for interconnecting such hardware. In one embodiment, coherency is maintained between one or more cache hardware 1906 and cores 1902-A-N.

In some embodiments, one or more of the cores 1902A-N are capable of multithreading. The system agent 1910 includes those components coordinating and operating cores 1902A-N. The system agent hardware 1910 may include for example a power control unit (PCU) and a display hardware. The PCU may be or include logic and components needed for regulating the power state of the cores 1902A-N and the integrated graphics logic 1908. The display hardware is for driving one or more externally connected displays.

The cores 1902A-N may be homogenous or heterogeneous in terms of architecture instruction set; that is, two or more of the cores 1902A-N may be capable of execution the same instruction set, while others may be capable of executing only a subset of that instruction set or a different instruction set. In one embodiment, the cores 1902A-N are heterogeneous and include both the "small" cores and "big" cores described below.

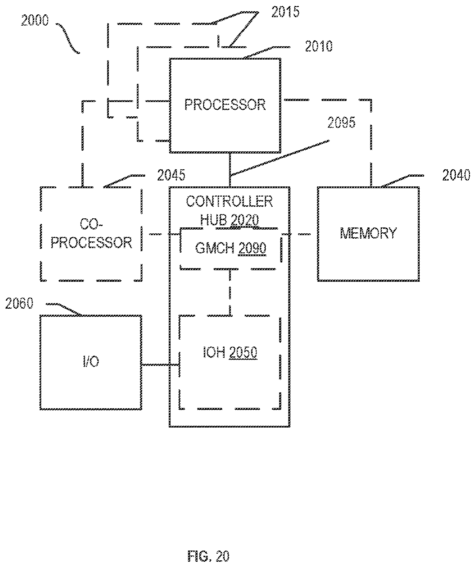

Figures 20-23 are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 20****,** shown is a block diagram of a system 2000 in accordance with one embodiment of the present invention. The system 2000 may include one or more processors 2010, 2015, which are coupled to a controller hub 2020. In one embodiment the controller hub 2020 includes a graphics memory controller hub (GMCH) 2090 and an Input/Output Hub (IOH) 2050 (which may be on separate chips); the GMCH 2090 includes memory and graphics controllers to which are coupled memory 2040 and a coprocessor 2045; the IOH 2050 is couples input/output (I/O) devices 2060 to the GMCH 2090. Alternatively, one or both of the memory and graphics controllers are integrated within the processor (as described herein), the memory 2040 and the coprocessor 2045 are coupled directly to the processor 2010, and the controller hub 2020 in a single chip with the IOH 2050.

The optional nature of additional processors 2015 is denoted in Figure 20 with broken lines. Each processor 2010, 2015 may include one or more of the processing cores described herein and may be some version of the processor 1900.

The memory 2040 may be, for example, dynamic random access memory (DRAM), phase change memory (PCM), or a combination of the two. For at least one embodiment, the controller hub 2020 communicates with the processor(s) 2010, 2015 via a multi-drop bus, such as a frontside bus (FSB), point-to-point interface, or similar connection 2095.

In one embodiment, the coprocessor 2045 is a special-purpose processor, such as, for example, a high-throughput MIC processor, a network or communication processor, compression engine, graphics processor, GPGPU, embedded processor, or the like. In one embodiment, controller hub 2020 may include an integrated graphics accelerator.

There can be a variety of differences between the physical resources 2010, 2015 in terms of a spectrum of metrics of merit including architectural, microarchitectural, thermal, power consumption characteristics, and the like.

In one embodiment, the processor 2010 executes instructions that control data processing operations of a general type. Embedded within the instructions may be coprocessor instructions. The processor 2010 recognizes these coprocessor instructions as being of a type that should be executed by the attached coprocessor 2045. Accordingly, the processor 2010 issues these coprocessor instructions (or control signals representing coprocessor instructions) on a coprocessor bus or other interconnect, to coprocessor 2045. Coprocessor(s) 2045 accept and execute the received coprocessor instructions.

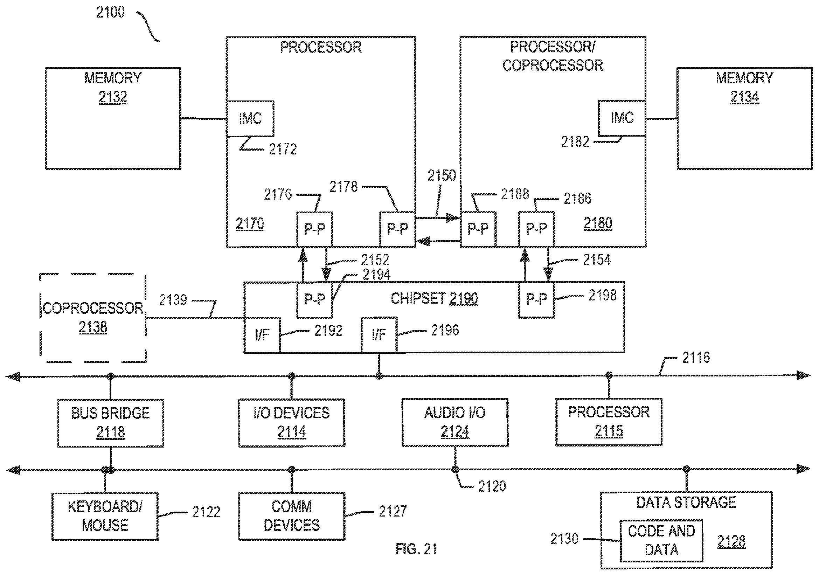

Referring now to **Figure 21****,** shown is a block diagram of a first more specific exemplary system 2100 in accordance with an embodiment of the present invention. As shown in Figure 21, multiprocessor system 2100 is a point-to-point interconnect system, and includes a first processor 2170 and a second processor 2180 coupled via a point-to-point interconnect 2150. Each of processors 2170 and 2180 may be some version of the processor 1900. In one embodiment of the invention, processors 2170 and 2180 are respectively processors 2010 and 2015, while coprocessor 2138 is coprocessor 2045. In another embodiment, processors 2170 and 2180 are respectively processor 2010 coprocessor 2045.

Processors 2170 and 2180 are shown including integrated memory controller (IMC) hardware 2172 and 2182, respectively. Processor 2170 also includes as part of its bus controller hardware point-to-point (P-P) interfaces 2176 and 2178; similarly, second processor 2180 includes P-P interfaces 2186 and 2188. Processors 2170, 2180 may exchange information via a point-to-point (P-P) interface 2150 using P-P interface circuits 2178, 2188. As shown in Figure 21, IMCs 2172 and 2182 couple the processors to respective memories, namely a memory 2132 and a memory 2134, which may be portions of main memory locally attached to the respective processors.

Processors 2170, 2180 may each exchange information with a chipset 2190 via individual P-P interfaces 2152, 2154 using point to point interface circuits 2176, 2194, 2186, 2198. Chipset 2190 may optionally exchange information with the coprocessor 2138 via a high-performance interface 2139. In one embodiment, the coprocessor 2138 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 2190 may be coupled to a first bus 2116 via an interface 2196. In one embodiment, first bus 2116 may be a Peripheral Component Interconnect (PCI) bus, or a bus such as a PCI Express bus or another third generation I/O interconnect bus, although the scope of the present invention is not so limited.

As shown in Figure 21, various I/O devices 2114 may be coupled to first bus 2116, along with a bus bridge 2118 which couples first bus 2116 to a second bus 2120. In one embodiment, one or more additional processor(s) 2115, such as coprocessors, high-throughput MIC processors, GPGPU's, accelerators (such as, e.g., graphics accelerators or digital signal processing (DSP) hardware), field programmable gate arrays, or any other processor, are coupled to first bus 2116. In one embodiment, second bus 2120 may be a low pin count (LPC) bus. Various devices may be coupled to a second bus 2120 including, for example, a keyboard and/or mouse 2122, communication devices 2127 and a storage hardware 2128 such as a disk drive or other mass storage device which may include instructions/code and data 2130, in one embodiment. Further, an audio I/O 2124 may be coupled to the second bus 2120. Note that other architectures are possible. For example, instead of the point-to-point architecture of Figure 21, a system may implement a multi-drop bus or other such architecture.

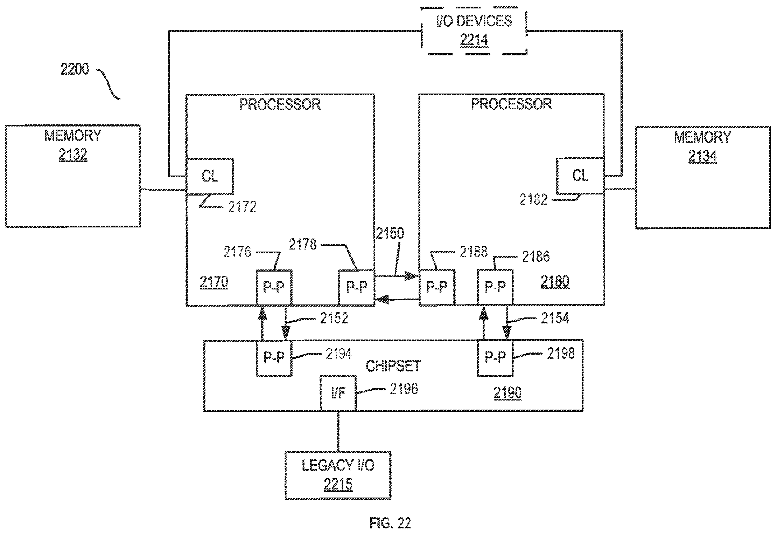

Referring now to **Figure 22****,** shown is a block diagram of a second more specific exemplary system 2200 in accordance with an embodiment of the present invention. Like elements in Figures 21 and 22 bear like reference numerals, and certain aspects of Figure 21 have been omitted from Figure 22 in order to avoid obscuring other aspects of Figure 22.

Figure 22 illustrates that the processors 2170, 2180 may include integrated memory and I/O control logic ("CL") 2172 and 2182, respectively. Thus, the CL 2172, 2182 include integrated memory controller hardware and include I/O control logic. Figure 22 illustrates that not only are the memories 2132, 2134 coupled to the CL 2172, 2182, but also that I/O devices 2214 are also coupled to the control logic 2172, 2182. Legacy I/O devices 2215 are coupled to the chipset 2190.

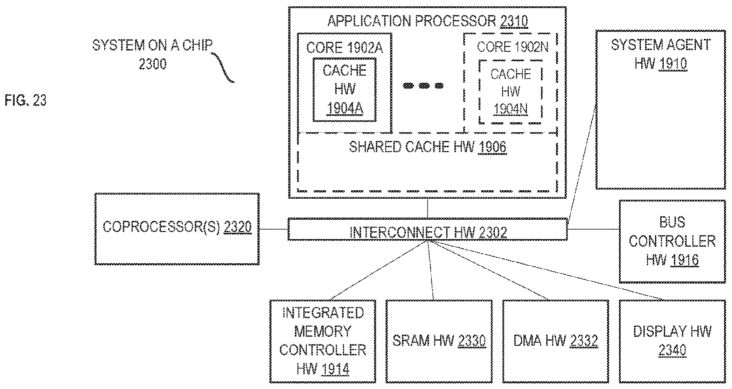

Referring now to **Figure 23****,** shown is a block diagram of a SoC 2300 in accordance with an embodiment of the present invention. Similar elements in Figure 19 bear like reference numerals. Also, dashed lined boxes are optional features on more advanced SoCs. In Figure 23, an interconnect hardware 2302 is coupled to: an application processor 2310 which includes a set of one or more cores 1902A-N and shared cache hardware 1906; a system agent hardware 1910; a bus controller hardware 1916; an integrated memory controller hardware 1914; a set or one or more coprocessors 2320 which may include integrated graphics logic, an image processor, an audio processor, and a video processor; an static random access memory (SRAM) hardware 2330; a direct memory access (DMA) hardware 2332; and a display hardware 2340 for coupling to one or more external displays. In one embodiment, the coprocessor(s) 2320 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 2130 illustrated in Figure 21, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

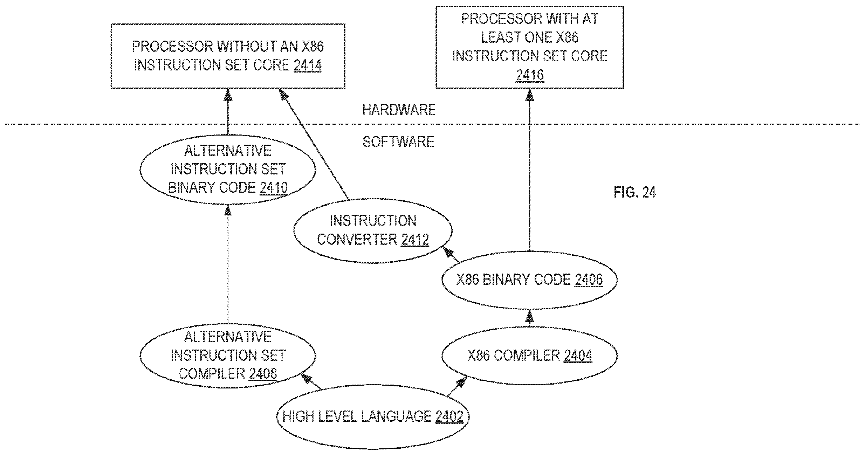

**Figure 24** is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. Figure 24 shows a program in a high level language 2402 may be compiled using an x86 compiler 2404 to generate x86 binary code 2406 that may be natively executed by a processor with at least one x86 instruction set core 2416. The processor with at least one x86 instruction set core 2416 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 2404 represents a compiler that is operable to generate x86 binary code 2406 (e.g., object code) that can, with or without additional linkage processing, be executed on the processor with at least one x86 instruction set core 2416. Similarly, Figure 24 shows the program in the high level language 2402 may be compiled using an alternative instruction set compiler 2408 to generate alternative instruction set binary code 2410 that may be natively executed by a processor without at least one x86 instruction set core 2414 (e.g., a processor with cores that execute the MIPS instruction set of MIPS Technologies of Sunnyvale, CA and/or that execute the ARM instruction set of ARM Holdings of Sunnyvale, CA). The instruction converter 2412 is used to convert the x86 binary code 2406 into code that may be natively executed by the processor without an x86 instruction set core 2414. This converted code is not likely to be the same as the alternative instruction set binary code 2410 because an instruction converter capable of this is difficult to make; however, the converted code will accomplish the general operation and be made up of instructions from the alternative instruction set. Thus, the instruction converter 2412 represents software, firmware, hardware, or a combination thereof that, through emulation, simulation or any other process, allows a processor or other electronic device that does not have an x86 instruction set processor or core to execute the x86 binary code 2406.

Although some embodiments have been described in reference to particular implementations, other implementations are possible according to some embodiments. Additionally, the arrangement and/or order of elements or other features illustrated in the drawings and/or described herein need not be arranged in the particular way illustrated and described. Many other arrangements are possible according to some embodiments.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

In the description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other.

An embodiment is an implementation or example of the inventions. Reference in the specification to "an embodiment," "one embodiment," "some embodiments," or "other embodiments" means that a particular feature, structure, or characteristic described in connection with the embodiments is included in at least some embodiments, but not necessarily all embodiments, of the inventions. The various appearances "an embodiment," "one embodiment," or "some embodiments" are not necessarily all referring to the same embodiments.

Not all components, features, structures, characteristics, etc. described and illustrated herein need be included in a particular embodiment or embodiments. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

As is evident from the above, the present disclosure comprises, amongst others, the following example embodiments.

According to a first example embodiment, there is provided an apparatus comprising: a hardware translator to translate process address space identifiers (PASIDs); a memory to store a job descriptor specifying a command and a first PASID, the command comprising one of a device-specific command or a common control command; a processor to execute an enqueue command instruction to enqueue an entry into a job queue, the entry comprising the command from the job descriptor, a second PASID translated from the first PASID by the hardware translator, and a command type field; and a hardware subsystem to process the entry from the job queue, wherein the hardware subsystem is to execute the command as a device-specific command when the command type field is of a first value and as a common control command when the command type field is of a second value.

According to a second example embodiment, in the apparatus of the first example embodiment, the first PASID is a virtual PASID and the second PASID is a host PASID.

According to a third example embodiment, in the apparatus of the first example embodiment, the first PASID is associated with a software thread executing in a virtual machine on the processor.

According to a fourth example embodiment, in the apparatus of the third example embodiment, the job descriptor is stored into the memory by the software thread.

According to a fifth example embodiment, in the apparatus of the third example embodiment, the job descriptor comprises a command type field set by the software thread.

According to a sixth example embodiment, in the apparatus of the third example embodiment, the command type field in the entry is set by the processor when executing the enqueue command instruction.

According to a seventh example embodiment, in the apparatus of the first example embodiment, the hardware translator automatically translates the first PASID to the second PASID responsive to an execution of the enqueue command instruction by the processor.

According to an eighth example embodiment, in the apparatus of the first example embodiment, the hardware translator is to translate the first PASID to the second PASID by traversing a PASID translation table structure.

According to a ninth example embodiment, in the apparatus of the first example embodiment, the common control command comprises a PASID reset command which, when executed by the hardware subsystem, causes the hardware subsystem to remove from the job queue all entries associated with the second PASID.

According to a tenth example embodiment, in the apparatus of the first example embodiment, the common control command comprises a PASID drain command which, when executed by the hardware subsystem, causes the hardware subsystem to process all entries in the job queue that are associated with the second PASID.

According to an eleventh example embodiment, in the apparatus of the first example embodiment, the common control command comprises a PASID abort command which, when executed by the hardware subsystem, causes the hardware subsystem to remove from the job queue all entries associated with the second PASID responsive to a PASID drain timeout.

According to a twelfth example embodiment, in the apparatus of the first example embodiment, the common control command comprises a user level interrupt enablement command which, when executed by the hardware subsystem, causes the hardware subsystem to subscribe a software thread associated with the second PASID to a user level interrupt.

According to a thirteenth example embodiment, in the apparatus of the first example embodiment, the common control command comprises a user level interrupt disablement command which, when executed by the hardware subsystem, causes the hardware subsystem to unsubscribe a software thread associated with the second PASID to a user level interrupt.

According to a fourteenth example embodiment, there is provided a method comprising: storing a job descriptor in a memory, the job descriptor specifying a command and a first PASID, the command comprising one of a device-specific command or a common control command; executing, by a processor, an enqueue command instruction to enqueue an entry into a job queue, the entry comprising the command from the job descriptor, a second PASID translated from the first PASID by a hardware translator, and a command type field; and executing the command, by a hardware subsystem, as a device-specific command when the command type field is of a first value and as a common control command when the command type field is of a second value.

According to a fifteenth example embodiment, in the method of the fourteenth example embodiment, the first PASID is a virtual PASID and the second PASID is a host PASID.

According to a sixteenth example embodiment, in the method of the fourteenth example embodiment, the first PASID is associated with a software thread executing in a virtual machine on the processor.

According to a seventeenth example embodiment, in the method of the sixteenth example embodiment, the job descriptor is stored into the memory by the software thread.

According to an eighteenth example embodiment, in the method of the sixteenth example embodiment, the job descriptor comprises a command type field set by the software thread.

According to a nineteenth example embodiment, in the method of the sixteenth example embodiment, executing the enqueue command instruction further comprises setting the command type field in the entry.

According to a twentieth example embodiment, in the method of the fourteenth example embodiment, executing the enqueue command instruction further comprises translating the first PASID to the second PASID.

According to a twenty-first example embodiment, in the method of the fourteenth example embodiment, translating the first PASID to the second PASID further comprises traversing a PASID translation table structure.

According to a twenty-second example embodiment, in the method of the fourteenth example embodiment, executing the command as a common control command comprises removing from the job queue all entries associated with the second PASID.

According to a twenty-third example embodiment, in the method of the fourteenth example embodiment, executing the command as a common control command comprises processing all entries in the job queue that are associated with the second PASID.

According to a twenty-fourth example embodiment, in the method of the fourteenth example embodiment, executing the command as a common control command comprises removing from the job queue all entries associated with the second PASID responsive to a PASID drain timeout.

According to a twenty-fifth example embodiment, in the method of the fourteenth example embodiment, executing the command as a common control command comprises subscribing a software thread associated with the second PASID to a user level interrupt.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize.

These modifications can be made to the invention in light of the above detailed description. The terms used in the following claims should not be construed to limit the invention to the specific embodiments disclosed in the specification and the drawings. Rather, the scope of the invention is to be determined entirely by the following claims, which are to be construed in accordance with established doctrines of claim interpretation.

## Claims

1. An apparatus comprising:
a processor core to execute one or more instructions to store a job descriptor, stored in a memory, into a job queue, the job descriptor comprising a command field to indicate a command to be performed, a command type field to indicate a command type, and an address field;
a hardware subsystem to be shared by a plurality of processes, the hardware subsystem configured to:
retrieve the job descriptor,
process the job descriptor, and
perform the command based on the command type field,
wherein, when the command type field indicates the command is a device-specific command, the hardware subsystem is to perform a direct memory access, DMA, operation to access the memory at one or more memory locations associated with a process address space identifier, PASID, determinable via the address field of the job descriptor; and
wherein, when the command type field indicates the command is a common control command, the hardware subsystem is to perform a control operation associated with the job queue.

2. The apparatus of claim 1, further comprising:
an input-output memory management unit, IOMMU, coupled to the memory, the IOMMU to perform virtual-to-physical address translations in response to memory access requests.

3. The apparatus of claim 2, wherein the one or more memory locations associated with the PASID comprise one or more physical addresses translated by the IOMMU from a corresponding one or more virtual addresses.

4. The apparatus of claim 2 or 3, wherein, when the command is a device-specific command, the IOMMU is to translate one or more virtual addresses associated with the DMA operation to a corresponding one or more physical addresses within the memory.

5. The apparatus of claim 4, wherein data retrieved from the one or more physical addresses is provided to the hardware subsystem responsive to the device-specific command.

6. The apparatus of any one of claims 1 to 5, wherein, when the command is a first common control command, the hardware subsystem is to reset the job queue.

7. The apparatus of any one of claims 1 to 5, wherein, when the command is a first common control command, the hardware subsystem is to stop processing of job descriptors from the job queue.

8. The apparatus of any one of claims 1 to 5, wherein, when the command is a first common control command, the hardware subsystem is to allow any in-flight processing of job descriptors to complete before pausing or stopping the job queue, and, when the command is a second common control command, the hardware subsystem is to terminate any in-flight processing of job descriptors and stop the job queue.

9. The apparatus of any one of claims 1 to 8, wherein the PASID comprises a host PASID translated from a corresponding guest PASID.

10. The apparatus of claim 9, wherein the guest PASID is translated to the host PAISID by a hardware translator or by the processor core executing one or more additional instructions.
